# EUROPEAN PATENT APPLICATION

(11) **EP 4 845 065 A1**
(43) Date of publication of application: **25.11.2026**
(21) Application number: 25785462.0
(22) Date of filing: 03.03.2025
(51) Int. Cl.: H04L 1/00

(54) **FORWARD ERROR CORRECTION CAPABILITY PROPAGATION METHOD AND RELATED DEVICE**

(30) Priority: 08.04.2024 CN 202410432890
(71) Applicant: Tencent Technology (Shenzhen) Company Limited, Shenzhen, Guangdong 518057 (CN)
(72) Inventor: HUANG, Xing, Shenzhen, Guangdong 518057 (CN); DENG, Yufeng, Shenzhen, Guangdong 518057 (CN); GUAN, Dichao, Shenzhen, Guangdong 518057 (CN)
(74) Representative: Nederlandsch Octrooibureau
(86) International application number: PCT/CN2025/080120
(87) International publication number: WO 2025/213981

(57) **Abstract**

The present application provides a forward error correction capability propagation method and a related device. The method comprises: determining a forward error correction capability of a first node, wherein the forward error correction capability comprises a coding algorithm set, a maximum block duration, and a maximum protection level, and the forward error correction capability of the first node comprises a first coding algorithm set, a first maximum block duration, and a first maximum protection level; performing encapsulation on the basis of the first coding algorithm set, the first maximum block duration, and the first maximum protection level to obtain a first capability packet; and if it is determined that there is a downlink node connected to the first node and adjacent to the first node, sending the first capability packet to the downlink node, so that on the basis of the first capability packet, the downlink node determines the forward error correction capability propagated from the first node. By propagating a forward error correction capability of a node in a transmission network downstream by means of a packet, a receiving node can determine a forward error correction coding mode of a sending node on the basis of the packet to execute corresponding decoding, thereby improving the bandwidth utilization rate and the computing resource utilization rate.

## Description

This application claims priority to Chinese Patent Application No. 202410432890.7, entitled "FORWARD ERROR CORRECTION CAPABILITY PROPAGATION METHOD AND RELATED APPARATUS" and filed with the China National Intellectual Property Administration on April 8, 2024.

### FIELD OF THE TECHNOLOGY

This application relates to the field of data distribution technologies, and in particular, to a forward error correction capability propagation technology.

### BACKGROUND OF THE DISCLOSURE

With the continuous development of computer technology, requirements for speed and quality of data transmission have become increasingly high. In a digital communication system, signals are inevitably affected by various factors during transmission, resulting in signal quality degradation. To ensure accurate data transmission, some measures need to be taken to detect and correct these errors. Therefore, forward error correction (FEC) technology has been proposed to resolve this type of data transmission problem.

The core idea of forward error correction technology is to pre-process signals at a transmitting end by adding redundant information (that is, error correction codes), so that a receiving end can perform decoding and error correction based on the error correction codes after receiving the signals even in the presence of some errors in the signals, to recover the original correct signals.

In a segmented transmission network provided in the related art, each transmission segment is regarded as a point-to-point virtual channel. Each transmission segment uses its own forward error correction capability for point-to-point forward error correction, causing excessive redundant information at each node. As a result, the node needs to consume more computing resources for decoding and encoding, which not only increases computing costs but may also increase latency.

### SUMMARY

Embodiments of this application provide a forward error correction capability propagation method and a related apparatus. A forward error correction capability of a node in a transmission network is propagated downstream through a message, so that a receiving node can determine a forward error correction encoding scheme of a transmitting node based on the message, to perform corresponding decoding, thereby improving bandwidth utilization and computing resource utilization.

An aspect of this application provides a forward error correction capability propagation method. The method is performed by a computer device and includes:
determining a forward error correction capability of a first node, the forward error correction capability including a first encoding algorithm set, a first maximum group duration, and a first maximum protection level of the first node, the first encoding algorithm set indicating a set of encoding algorithms of the first node, the maximum group duration indicating a maximum duration for receiving a single group of data by the first node;
performing encapsulation based on the first encoding algorithm set, the first maximum group duration, and the first maximum protection level, to obtain a first capability message; and
transmitting the first capability message to a downstream node connected to and adjacent to the first node, in order to determine, based on the first capability message, the forward error correction capability propagated from the first node.

Another aspect of this application provides a forward error correction capability propagation apparatus. The apparatus is deployed on a computer device and includes:
a capability determining module, configured to determine a forward error correction capability of a first node, the forward error correction capability including a first encoding algorithm set, a first maximum group duration, and a first maximum protection level of the first node, the first encoding algorithm set indicating a set of encoding algorithms of the first node, the first maximum group duration indicating a maximum duration for receiving a single group of data by the first node;
a message encapsulation module, configured to perform encapsulation based on the first encoding algorithm set, the first maximum group duration, and the first maximum protection level, to obtain a first capability message; and
a message transmission module, configured to transmit the first capability message to a downstream node connected to and adjacent to the first node, in order to determine, based on the first capability message, the forward error correction capability propagated from the first node.

Another aspect of this application provides a computer device, including: a memory and a processor,
the memory having a computer program stored therein, the computer program, when executed on the processor, performing the method according to the foregoing aspects.

Another aspect of this application provides a computer-readable storage medium, the computer-readable storage medium having a computer program stored therein, the computer program, when executed on a computer, causing the computer to perform the method according to the foregoing aspects.

Another aspect of this application provides a computer program product, including a computer program, the computer program being stored in a computer-readable storage medium. A processor of a computer device reads the computer program from the computer-readable storage medium, and executes the computer program, to cause the computer device to perform the method according to the foregoing aspects.

As can be seen from the foregoing technical solutions, the embodiments of this application have the following advantages:
This application provides a forward error correction capability propagation method and a related apparatus. First, a forward error correction capability of a first node is determined. The forward error correction capability includes a first encoding algorithm set, a first maximum group duration, and a first maximum protection level. The first encoding algorithm set refers to encoding schemes supported by the first node, which are generally related to a device type, a manufacturer, a hardware version, and the like of the first node. The maximum group duration refers to a maximum duration for receiving a single group of data acceptable to the first node, which is generally related to a service configuration at the first node. The service configuration may include a service data transmission frequency of the first node and a local cache size of the first node. Generally, when the service data transmission frequency is higher and/or the local cache size is smaller, the maximum group duration is shorter. The maximum protection level refers to a maximum protection capability that the first node can provide, which is generally related to performance of the first node. Generally, the better the performance of the first node, the more complex the encoding the first node can support, and therefore the higher the protection level the first node can provide. Encapsulation is performed based on the first encoding algorithm set, the first maximum group duration, and the first maximum protection level that correspond to the first node, to obtain a first capability message. In this way, in a form of the message, the forward error correction capability of the first node is propagated to a directly connected downstream node, so that the downstream node determines, according to the message, the forward error correction capability propagated from the transmitting node, that is, the first node. According to the method provided in the embodiments of this application, a forward error correction capability of a node in a transmission network is propagated downstream in a form of a message, so that a receiving node can determine a forward error correction encoding scheme of a transmitting node based on the message, to perform corresponding decoding, thereby improving bandwidth utilization and computing resource utilization. In addition, each node does not need to be concerned with another node and networking technology details. When a service configuration and node performance of the node change, the forward error correction capability can be propagated simply by regenerating a capability message and transmitting the capability message to a downstream channel, thereby reducing difficulty of network management and improving management efficiency.

### BRIEF DESCRIPTION OF THE DRAWINGS

FIG. 1 is a diagram of an application environment of a forward error correction capability propagation method according to an embodiment of this application.
FIG. 2 is a flowchart of a forward error correction capability propagation method according to an embodiment of this application.
FIG. 3 is a message analysis diagram of a capability propagation protocol according to an embodiment of this application.
FIG. 4 is a flowchart of a forward error correction capability propagation method according to an embodiment of this application.
FIG. 5 is a flowchart of a reverse control method based on a forward error correction capability propagation method according to an embodiment of this application.
FIG. 6 is a message analysis diagram of a reverse control protocol of a forward error correction capability according to an embodiment of this application.
FIG. 7 is a flowchart of a reverse control method based on a forward error correction capability propagation method according to an embodiment of this application.
FIG. 8 is a flowchart of a redundancy filtering method based on a forward error correction capability propagation method according to an embodiment of this application.
FIG. 9 is a schematic message diagram of a packet header of an original data packet according to an embodiment of this application.
FIG. 10 is a schematic message diagram of a packet header of a redundant error correction packet according to an embodiment of this application.
FIG. 11 is an operational logic diagram of a redundancy filtering method based on a forward error correction capability propagation method according to an embodiment of this application.
FIG. 12 is a schematic diagram of an embodiment of a forward error correction capability propagation apparatus according to an embodiment of this application.
FIG. 13 is a schematic structural diagram of a server according to an embodiment of this application.

### DESCRIPTION OF EMBODIMENTS

In the specification, claims, and the foregoing accompanying drawings of this application, the terms "first", "second", "third", "fourth", and the like (if any) are configured for distinguishing between similar objects and are not necessarily configured for describing a particular order or sequence. Data used in this way is interchangeable in a suitable case, so that embodiments of this application described herein can, for example, be implemented in an order other than those illustrated or described herein. In addition, the terms "include", "corresponding to", and any other variants are intended to cover the non-exclusive inclusion. For example, a process, method, system, product, or device that includes a series of operations or units is not necessarily limited to those expressly listed operations or units, but may include other operations or units not expressly listed or inherent to the process, method, product, or device.

With the rapid development of computer technology, requirements for speed and quality of data transmission have become increasingly stringent. In a digital communication system, regardless of whether signals are transmitted through optical fibers, cables, or wireless media, the signals inevitably encounter various types of interference and challenges, such as noise, attenuation, and multi-path effects. All these factors may result in signal quality degradation and consequently lead to data errors.

To ensure accurate and efficient data transmission, a person skilled in the art has been committed to researching and developing various data transmission technologies, in which forward error correction (FEC) technology, as an important means for ensuring data transmission, has attracted widespread attention and application.

Specially, forward error correction technology refers to pre-processing signals at a transmitting end and enhancing an anti-interference capability of the signals by adding redundant information (namely, error correction codes). In this way, a receiving end can perform decoding and error correction based on the error correction codes after receiving the signals even in the presence of some errors in the signals, to recover the original correct signals.

In a segmented transmission network provided in the related art, each transmission segment is regarded as a point-to-point virtual channel. A transmitter in the virtual channel is a transmitting node, a receiver in the virtual channel is a receiving node, and a plurality of forwarding nodes may be included between the transmitting node and the receiving node. Each transmission segment is regarded as an independent virtual channel, and each channel uses its own forward error correction capability to perform error correction according to a specific protection level. Although this manner can ensure data transmission quality of each segment, it leads to an excessive accumulation of redundant information in the entire network. The excessive redundant information not only increases a computational load on each node, causing the node to consume more computing resources for decoding and encoding operations, but also may lead to increased data transmission latency. The impact becomes more pronounced, especially in large-scale and highly complex networks, and may become a bottleneck restricting improvements in network performance.

Therefore, how to ensure data transmission quality while reducing the accumulation of redundant information, alleviating the computational load on the node, and improving data transmission efficiency is a technical problem to be urgently resolved by a person skilled in the art.

To resolve the foregoing problem, this application provides a forward error correction capability propagation method and a related apparatus. First, a forward error correction capability of a first node is determined. The forward error correction capability includes an encoding algorithm set, a maximum group duration, and a maximum protection level. It is noted that in the present application, each node (for example, a first node, a second node, a third node, and so on) may have its respective forward error correction capability and the meaning of the forward error correction capability may adapt to the node it refers to. The encoding algorithm set refers to encoding schemes executable by the first node, which are generally related to a device type, a manufacturer, a hardware version, and the like of the first node. The maximum group duration refers to a maximum duration that the first node can accept for receiving a single group of data, which is generally related to a service configuration at the first node. The service configuration may include a service data transmission frequency of the first node and a local cache size of the first node. Generally, when the service data transmission frequency is higher and/or the local cache size is smaller, and the maximum group duration is shorter. The maximum protection level refers to a maximum protection capability that the first node can provide, which is generally related to performance of the first node. Generally, the better the performance of the first node, the more complex the encoding the first node can support, and therefore the higher the protection level the first node can provide. Encapsulation is performed based on the encoding algorithm set, the maximum group duration, and the maximum protection level that correspond to the first node, to obtain a first capability message. In this way, in a form of the message, the forward error correction capability of the first node is propagated to a directly connected downstream node, so that the downstream node determines, according to the message, the forward error correction capability propagated from the transmitting node, that is, the first node. According to the method provided in the embodiments of this application, a forward error correction capability of a node in a transmission network is propagated downstream in a form of a message, so that a receiving node can determine a forward error correction encoding scheme of a transmitting node based on the message, to perform corresponding decoding, thereby improving bandwidth utilization and computing resource utilization. In addition, each node does not need to be concerned with another node and networking technology details. When a service configuration and node performance of the node change, the forward error correction capability can be propagated simply by regenerating a capability message and transmitting the capability message to a downstream channel, thereby reducing difficulty of network management and improving management efficiency.

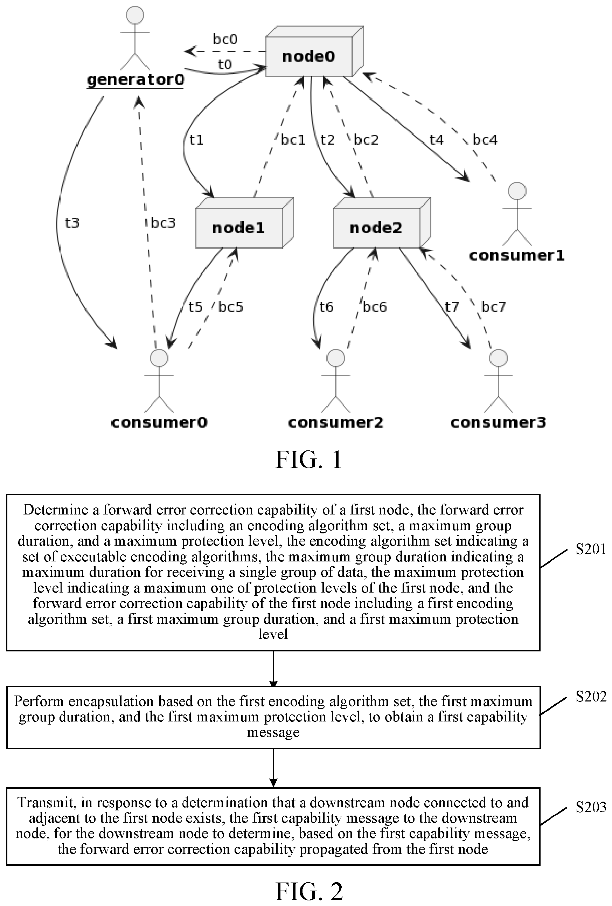

For ease of understanding, refer to FIG. 1. FIG. 1 is a diagram of an application environment of a forward error correction capability propagation method according to an embodiment of this application. As shown in FIG. 1, the forward error correction capability propagation method in this embodiment of this application is applied to a topology network. The topology network includes a data source node (generator0), forwarding nodes (node0, node1, and node2), and data consumer nodes (consumer0, consumer1, consumer2, and consumer3).

Forward error correction is a technology for controlling transmission errors in a unidirectional communication system. Therefore, data is transmitted unidirectionally from the data source node to the data consumer nodes, possibly passing through the forwarding nodes during transmission. Unidirectional transmission is performed between the nodes through virtual channels (t0, t1, t2, t3, t4, t5, t6, and t7). Data of the generator may reach the consumers through a plurality of different paths.

A node, for example, a first node, first determines its own (local) forward error correction capability. The forward error correction capability includes an encoding algorithm set executable by the node, a maximum group duration, and a maximum protection level. Then, the node performs encapsulation based on the forward error correction capability to obtain a capability message, and transmits the capability message to a downstream node directly connected to the node, to propagate the forward error correction capability downstream.

The following introduces the forward error correction capability propagation method in this application. FIG. 2 is a flowchart of a forward error correction capability propagation method according to an embodiment of this application. It should be understood that the various embodiments described in this specification are not mutually exclusive, and that features, structures, or characteristics described in connection with one embodiment may be combined, in whole or in part, with features, structures, or characteristics of one or more other embodiments described herein, unless such combination would result in a technical conflict or contradiction, or would render the resulting embodiment inoperative for its intended purpose. Accordingly, any embodiment disclosed herein may be practiced in combination with any other embodiment, or portion thereof, disclosed herein, to the extent such combination is technically feasible and consistent with the teachings of the present disclosure. The method includes the following operations.

201: Determine a forward error correction capability of a first node, the forward error correction capability including an encoding algorithm set, a maximum group duration, and a maximum protection level, the encoding algorithm set indicating a set of encoding algorithms, the maximum group duration indicating a maximum duration for receiving a single group of data, the maximum protection level indicating a maximum one of protection levels of the first node, and the forward error correction capability of the first node including a first encoding algorithm set, a first maximum group duration, and a first maximum protection level.

The first node may be any node in the topology network shown in FIG. 1, that is, may be a data source node (generator), a forwarding node (node), or a data consumer node (consumer). The forward error correction capability refers to a capability of a node to resist interference and errors during data transmission, which is specifically reflected as an encoding algorithm set, a maximum group duration, and a maximum protection level.

The encoding algorithm set refers to a set of executable forward error correction encoding schemes. These encoding schemes can ensure that original data can be recovered through a specific mechanism even in the presence of noise or interference during transmission. Selection of the encoding algorithm set is generally related to factors such as a device type, a manufacturer, and a hardware version of a node. Different device types and manufacturers may adopt different encoding technologies, to adapt to different application scenarios and transmission requirements. Common encoding algorithms include parity-check code, Hamming code, Bose-Chaudhuri-Hocquenghem (BCH) code, Reed-Solomon code, low-density parity-check (LDPC) code, and the like. A specific encoding algorithm is not limited in this application, but an encoding algorithm set supported by the first node needs to be determined.

The maximum group duration refers to a maximum duration that can be accepted for receiving a single group of data. For example, a start time point of the maximum duration is a time point when the receiving of the single group of data starts, and an end time point of the maximum duration is a time point when the receiving of the single group of data ends, i.e., when the single group of data is completely received. During forward error correction, data is generally divided into a series of smaller and fixed-length data blocks. These data blocks are regarded as independent units during transmission, and error correction encoding is applied to each data block separately. Each block includes a specific data amount of data and corresponding redundant information, and the data in each block corresponds to a single group of data. For each single group of data, original data and redundant data that are available for decoding and error correction by the node need to be obtained within the maximum group duration. The parameter is generally related to a service configuration at a node. The service configuration may include a service data transmission frequency of the node and a local cache size of the first node. Generally, when the service data transmission frequency is higher and/or the local cache size is smaller, and the maximum group duration is shorter. The service data transmission frequency is also related to a type of data transmitted on the node. For data with high timeliness requirements, for example, robot control data, any latency or error in transmission of a control instruction may cause a robot to perform an incorrect action. Therefore, the maximum group duration is relatively short, to ensure real-time performance and accuracy of the data. However, for some data with low timeliness requirements, for example, file transfer or backup data, the maximum group duration may be relatively long, to balance transmission efficiency and the error correction capability. For audio data, generally, because an intra-frame coding scheme is adopted for audio coding, each frame includes sufficient information for independent decoding. Therefore, theoretically, content of a frame can be decoded without relying on another frame, that is, any frame can be independently decoded. In this way, the maximum group duration may be long.

The maximum protection level refers to a highest error correction capability that can be provided or supported. This parameter is generally closely related to performance of a node. Generally, a node with better performance can support a more complex encoding algorithm and a higher-level error correction mechanism, thereby providing a higher protection level. A high protection level means that even in the presence of severe interference or errors, a node can effectively recover data, to ensure reliability of transmission.

The above describes specific meanings of several parameters in the forward error correction capability. In this embodiment, the forward error correction capability supported by/of the first node correspondingly includes the first encoding algorithm set, the first maximum group duration, and the first maximum protection level.

In a possible implementation, operation 201 specifically includes the following operations.

2011: Determine the first encoding algorithm set according to an encoder operable on the first node.

2012: Determine the first maximum group duration according to a service configuration of the first node.

2013: Determine the first maximum protection level according to data processing performance of the first node.

During communication, to ensure correct data transmission, a node generally uses an encoder to code data. A type of the encoder determines an encoding algorithm set that the node can implement. For example, if the first node supports an LDPC encoder, the first node supports an LDPC encoding algorithm. If a BCH encoder is supported/operable, a BCH encoding algorithm is supported. Therefore, a coding algorithm used by the node may be determined by querying a type of an encoder supported/operable by the node. By querying a device file or configuration interface of the first node, the encoder may be obtained. For example, by querying the device file or configuration interface of the node, it is learned that the node supports the LDPC encoder. In this case, it may be determined that the node uses the LDPC encoding algorithm during communication.

The first maximum group duration represents a maximum duration that the first node can accept for receiving a single group of data. The maximum duration is determined based on a service configuration of data transmitted on the first node. The service configuration may include a service data frequency and a local cache size. The service data frequency refers to a frequency of data transmission or reception in a service, and reflects a requirement of the service for data transmission and a data transmission rate. When the service data frequency is high, data needs to be transmitted more frequently. This requires a relatively short group duration, for ease of faster data transmission and reception, thereby reducing data waiting time and latency. On the contrary, if the service data frequency is low, the group duration may be appropriately increased, to balance transmission efficiency and resource utilization. A local cache is configured for storing temporary data, for ease of quick access and transmission when needed. If the local cache is small, an amount of data that can be carried by each group is limited. Therefore, the group needs to be transmitted more frequently, that is, the group duration needs to be relatively short. However, if the local cache is large, more data can be accommodated, so that a grouping frequency can be reduced, that is, the group duration can be appropriately increased.

Performance of the first node, such as a computing capability or a storage capability of the first node, directly affects an error correction capability and a protection level that the first node can provide. Generally, a node with better performance can support a more complex encoding algorithm and a higher-level error correction mechanism, thereby providing a higher protection level. Therefore, a corresponding first maximum protection level can be determined by evaluating the performance of the first node.

202: Perform encapsulation based on the first encoding algorithm set, the first maximum group duration, and the first maximum protection level, to obtain a first capability message.

The capability message may be a message obtained by encapsulating the forward error correction capability, to reflect the forward error correction capability propagated from the first node. The capability message may be in a form of a real-time transport protocol (RTP). In the capability message, the parameters are identified by different fields.

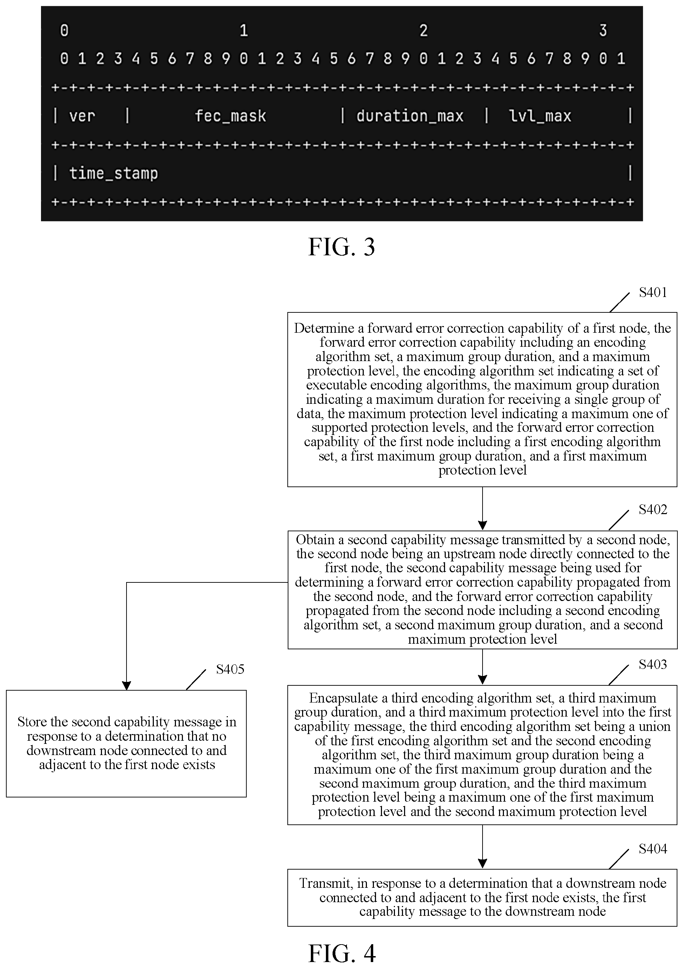

For ease of understanding, refer to FIG. 3. FIG. 3 is a message analysis diagram of a capability propagation protocol according to an embodiment of this application.

As shown in FIG. 3, ver identifies a protocol version, which may be configured for accommodating a future protocol change; fec_mask is a mask identifier for an available FEC algorithm type and version, equivalent to the encoding algorithm set in the forward error correction capability; duration_max is a maximum group duration that can be provided, equivalent to the maximum group duration in the forward error correction capability; lvl_max is a maximum protection level that can be provided, equivalent to the maximum protection level in the forward error correction capability; and time_stamp is a timestamp, which may be configured for resisting out-of-order network transmission.

203: Transmit, in response to a determination that a downstream node connected to and adjacent to the first node exists, the first capability message to the downstream node, for the downstream node to determine, based on the first capability message, the forward error correction capability propagated from the first node.

The forward error correction capability is propagated to the downstream node. Therefore, if the downstream node has a connected and adjacent first node, corresponding to the data source node (generator) or the forwarding node (node) in FIG. 1, the first node transmits the first capability message to the connected and adjacent downstream node after generating the corresponding first capability message, for the downstream node to determine, based on the first capability message, the forward error correction capability propagated from the first node. The connection may be a physical line connection or a logical information transmission path, for example, a communication link established between two nodes in network communication. Being connected and adjacent to the first node may also be referred to as being directly connected to the first node, that is, a direct connection is established with the first node without requiring any relay or hop through an intermediate node.

Specifically, the downstream node of the first node may be a forwarding node (node) or a data consumer node (consumer).

When the downstream node of the first node is a node, by combining a local computing capability and bandwidth capability of the node, the node derives, when receiving the first capability message (a propagation protocol), a new forward error correction capability (for example, a maximum protection level) that can be provided downstream, and propagates the new forward error correction capability to all directly connected downstream channels. When the downstream node of the first node is a consumer, because the consumer does not have a downstream node, the consumer caches the first capability message when receiving the first capability message (a propagation protocol).

For ease of understanding, the following parameters are defined herein in this embodiment of this application.

cap_local: A local forward error correction capability of a node. Corresponding fields are as follows: an encoding algorithm set cap_local.mask, a maximum group duration cap_local.duration_max, and a maximum protection level cap_local.lvl_max.

By using a generator as an example, a procedure of the forward error correction capability propagation method is as follows:
1. Obtain a forward error correction encoder type version locally supported by the generator, and update cap_local.mask (the first encoding algorithm set).
2. Update cap_local.duration_max (the first maximum group duration) according to the service configuration, including the service data frequency and the local cache size.
3. Obtain a central processing unit (CPU) load of the generator, and update cap_local.lvl_max (the first maximum protection level) with reference to an encoder type (which may be empty).
4. Generate a capability message (the first capability message) corresponding to FIG. 3, and transmit the capability message to the directly connected downstream node (node or consumer), where fec_mask in the capability message is equal to cap_local.mask, duration_max is equal to cap_local.duration_max, and lvl_max is equal to cap_local.lvl_max.

In a possible implementation, for the first maximum group duration and the first maximum protection level, real-time detection or periodical detection may be performed on the service configuration and node performance of the first node. When a change occurs in the first maximum group duration and the first maximum protection level, the first capability message is updated.

Further, regarding transmission timing (equivalent to propagation timing) for transmitting the first capability message to the downstream node, the message may also be transmitted periodically (static periodic propagation) or transmitted immediately after a change occurs (immediate propagation upon change).

This application provides a forward error correction capability propagation method and a related apparatus. First, a forward error correction capability of a first node is determined. The forward error correction capability includes an encoding algorithm set, a maximum group duration, and a maximum protection level. The encoding algorithm set refers to encoding schemes supported by the first node, which are generally related to a device type, a manufacturer, a hardware version, and the like of the first node. The maximum group duration refers to a maximum duration that the first node can accept for receiving a single group of data, which is generally related to a service configuration at the first node. The service configuration may include a service data transmission frequency of the first node and a local cache size of the first node. Generally, when the service data transmission frequency is higher and/or the local cache size is smaller, and the maximum group duration is shorter. The maximum protection level refers to a maximum protection capability that the first node can provide, which is generally related to performance of the first node. Generally, the better the performance of the first node, the more complex the encoding the first node can support, and therefore the higher the protection level the first node can provide. Encapsulation is performed based on the encoding algorithm set, the maximum group duration, and the maximum protection level that correspond to the first node, to obtain a first capability message. In this way, in a form of the message, the forward error correction capability of the first node is propagated to a directly connected downstream node, so that the downstream node determines, according to the message, the forward error correction capability propagated from the transmitting node, that is, the first node. According to the method provided in the embodiments of this application, a forward error correction capability of a node in a transmission network is propagated downstream in a form of a message, so that a receiving node can determine a forward error correction encoding scheme of a transmitting node based on the message, to perform corresponding decoding, thereby improving bandwidth utilization and computing resource utilization. In addition, each node does not need to be concerned with another node and networking technology details. When a service configuration and node performance of the node change, the forward error correction capability can be propagated simply by regenerating a capability message and transmitting the capability message to a downstream channel, thereby reducing difficulty of network management and improving management efficiency.

If the first node has a directly connected downstream node, the first node is the data source node (generator) or forwarding node (node) in FIG. 1. When the first capability message is generated, the first capability message may be generated based on the forward error correction capability of the first node. However, when the first node has a directly connected upstream node, the first node may be the forwarding node (node) or data consumer node (consumer) in FIG. 1. In this case, the first node may further obtain a capability message propagated from the upstream node, thereby obtaining a forward error correction capability propagated from the upstream node. In this way, when generating the first capability message, it is necessary to consider not only the forward error correction capability of the first node, but also the forward error correction capability propagated from the upstream node.

Next, the first node being the forwarding node (node) and the first node being the data consumer node (consumer) are respectively used as examples. The first node may obtain the capability message propagated from the upstream node. In an exemplary embodiment of the forward error correction capability propagation method provided in the embodiment corresponding to FIG. 2 in this application, refer to FIG. 4. FIG. 4 is a flowchart of a forward error correction capability propagation method according to an embodiment of this application. The method includes the following operations.

401: Determine a forward error correction capability of a first node, the forward error correction capability including an encoding algorithm set, a maximum group duration, and a maximum protection level, the encoding algorithm set indicating a set of executable encoding algorithms, the maximum group duration indicating a maximum duration for receiving a single group of data, the maximum protection level indicating a maximum one of supported protection levels, and the forward error correction capability of the first node including a first encoding algorithm set, a first maximum group duration, and a first maximum protection level.

402: Obtain a second capability message transmitted by a second node, the second node being an upstream node directly connected to the first node, the second capability message being used for determining a forward error correction capability propagated from the second node, and the forward error correction capability propagated from the second node including a second encoding algorithm set, a second maximum group duration, and a second maximum protection level.

In this embodiment, when the first node has a directly connected upstream node (for example, the second node), the first node is the forwarding node (node) or data consumer node (consumer). Therefore, the first node may obtain the forward error correction capability propagated from the upstream node through the second capability message. The second capability message also includes a forward error correction capability, corresponding to the second encoding algorithm set, the second maximum group duration, and the second maximum protection level.

403: Encapsulate a third encoding algorithm set, a third maximum group duration, and a third maximum protection level into the first capability message, the third encoding algorithm set being a union of the first encoding algorithm set and the second encoding algorithm set, the third maximum group duration being a maximum one of the first maximum group duration and the second maximum group duration, and the third maximum protection level being a maximum one of the first maximum protection level and the second maximum protection level.

404: Transmit, in response to a determination that a downstream node connected to and adjacent to the first node exists, the first capability message to the downstream node.

If the first node has a directly connected downstream node, the first node is a forwarding node (node). Therefore, the first capability message needs to be generated in combination with the forward error correction capability of the node and the forward error correction capability propagated from the upstream node (the second node).

Specifically, the first capability message may be obtained by encapsulating the third encoding algorithm set, the third maximum group duration, and the third maximum protection level. The third encoding algorithm set is the union of the first encoding algorithm set and the second encoding algorithm set, the third maximum group duration is the maximum one of the first maximum group duration and the second maximum group duration, and the third maximum protection level is the maximum one of the first maximum protection level and the second maximum protection level.

Operation 403 may be a possible implementation of operation 202, showing how the first capability message is generated when the first node is the forwarding node.

In a possible implementation, the second capability message carries a protocol version number, and after operation 402, the method further includes:
determining, according to the protocol version number, whether the second capability message is compatible with the first node.

After the second capability message is received, the protocol version number ver may be further checked, to ensure compatibility between the second capability message and the first node. If the second capability message is not compatible with the first node, the second capability message is ignored. If the second capability message is compatible with the first node, operation 403 continues to be performed.

In a possible implementation, the second capability message carries a timestamp, and after operation 402, the method further includes:
determining, according to the timestamp, whether the second capability message is a latest message.

After the second capability message is received, whether the second capability message is a latest message may be further checked. If the timestamp time_stamp of the second capability message indicates that the second capability message corresponds to a distant generation time, or another capability message with a newer timestamp has been received before, the second capability message is ignored. If the timestamp indicates that the second capability message is a latest message, operation 403 continues to be performed.

For ease of understanding, the following parameters are defined herein in this embodiment of this application.

cap_up: A forward error correction capability obtained based on a forward error correction capability message transmitted by an upstream node. Corresponding fields are as follows: an encoding algorithm set cap_up.mask, a maximum group duration cap_up.duration_max, and a maximum protection level cap_up.lvl_max.

In combination with the parameter cap_local above, by using a node as an example, a procedure of the forward error correction capability propagation method is as follows:
1. Obtain a forward error correction encoder type version locally supported by the node, and update cap_local.mask (the first encoding algorithm set).
2. Update cap_local.duration_max (the first maximum group duration) according to the service configuration, including the service data frequency, and the local cache size.
3. Wait to receive a forward error correction capability message transmitted from the upstream node.
4. Check ver when receiving the forward error correction capability message (for example, the second capability message) from the upstream node, and if the forward error correction capability message is not compatible with the node, ignore the message and return to operation 3; or if the forward error correction capability message is compatible with the node, perform operation 5.
5. Check time_stamp, and if the forward error correction capability message is not a latest message, ignore the message and return to operation 3; or if the forward error correction capability message is a latest message, obtain and cache cap_up according to the message.
6. Obtain a CPU load of the node, and update cap_local.lvl_max (the first maximum protection level) with reference to an encoder type.
7. Generate a capability message (the first capability message) corresponding to FIG. 3, and transmit the capability message to a directly connected downstream node (node or consumer), where in the capability message, fec_mask is equal to a union (bitwise or "|") of cap_up.mask and cap_local.mask, duration_max is equal to max(cap_up.duration_max, cap_local.duration.max), and lvl_max is equal to max(cap_up.lvl_max, cap_local.lvl_max).

405: Store the second capability message in response to a determination that no downstream node connected to and adjacent to the first node exists.

If the first node does not have a directly connected downstream node, the first node is a data consumer node (consumer), where the consumer does not have a downstream node. Therefore, it is only necessary to store the forward error correction capability in the second capability message.

For ease of understanding, by using a consumer as an example, a procedure of the forward error correction capability propagation method is as follows:
1. Obtain a forward error correction encoder type version locally supported by the consumer, and update cap_local.mask (the first encoding algorithm set).
2. Update cap_local.duration_max (the first maximum group duration) according to the service configuration, including the service data frequency, and the local cache size.
3. Wait to receive a forward error correction capability message transmitted by the upstream node.
4. Check ver when receiving the forward error correction capability message (the second capability message) from the upstream node, and if the forward error correction capability message is not compatible with the node, ignore the message and return to operation 3; or if the forward error correction capability message is compatible with the node, perform operation 5.
5. Check time_stamp, and if the forward error correction capability message is not a latest message, ignore the message and return to operation 3; or if the forward error correction capability message is a latest message, obtain and cache cap_up according to the message.

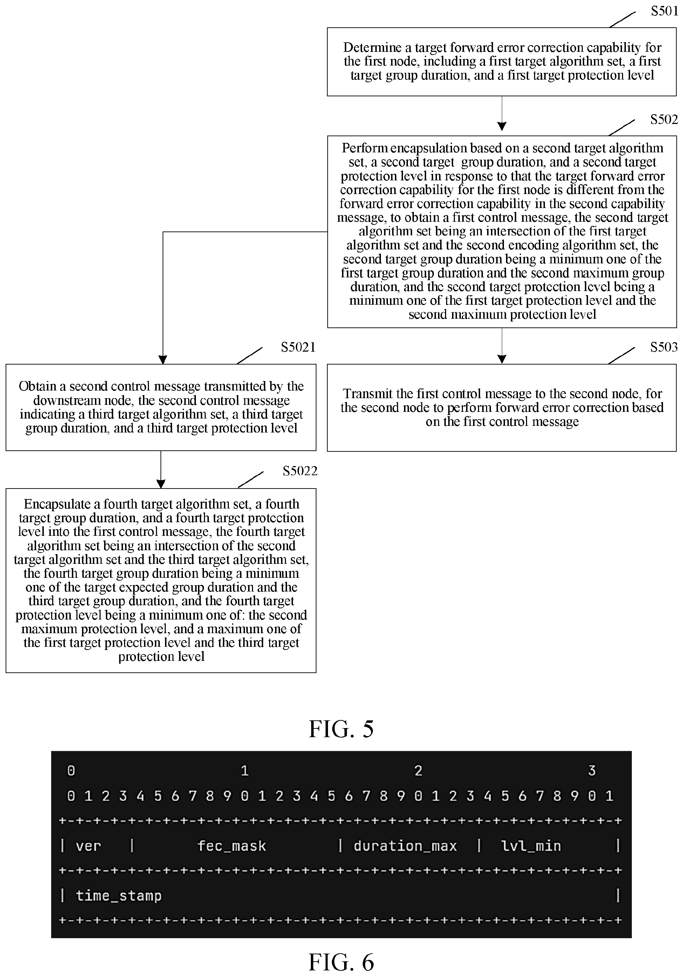

In an exemplary embodiment of a forward error correction capability propagation method provided in the embodiment corresponding to FIG. 4 in this application, refer to FIG. 5. FIG. 5 is a flowchart of a reverse control method based on a forward error correction capability propagation method according to an embodiment of this application. This embodiment of this application further provides a reverse control method of a downstream node. Reverse control refers to a method in which when a forward error correction capability at a receiving end changes, information is transmitted through a reverse channel, to request a transmitting end to re-determine the forward error correction capability.

As shown in FIG. 1, bc0 to bc7 are reverse control channels. A reverse control message is transmitted by a receiving node to a transmitting node. In other words, the node generating the reverse control message has a directly connected upstream node. In this case, the node may be specifically a forwarding node (node) or a data consumer node (consumer).

Referring to FIG. 5, after operation 402 in the embodiment corresponding to FIG. 4, the method further includes the following operations.

501: Determine a target forward error correction capability for the first node, including a first target algorithm set, a first target group duration, and a first target protection level.

At a receiving end of any virtual channel t, a forwarding node (node) or a data consumer node (consumer) obtains a target forward error correction capability (including a group duration, a protection level, and the like) according to an observed weak network status and a service configuration. The target forward error correction capability is transmitted to an upstream node, so that the upstream node can perform forward error correction encoding based on the target capability, which is beneficial to improving data transmission efficiency and data decoding speed and reducing decoding computing resources.

502: Perform encapsulation based on a second target algorithm set, a second target group duration, and a second target protection level in response to that the target forward error correction capability for the first node is different from the forward error correction capability in the second capability message, to obtain a first control message, the second target algorithm set being an intersection of the first target algorithm set and the second encoding algorithm set, the second target group duration being a minimum one of the first target group duration and the second maximum group duration, and the second target protection level being a minimum one of the first target protection level and the second maximum protection level.

After the target forward error correction capability for the first node is determined, the target error correction capability is compared with an error correction capability propagated from the upstream node. If there is a difference between the two capabilities, reverse control needs to be performed on the upstream node. The reverse control is performed by encapsulating a control message based on the target forward error correction capability, and transmitting the control message to the upstream node.

The control message may also be in a form of an RTP. In the control message, the parameters are identified by different fields.

For ease of understanding, refer to FIG. 6. FIG. 6 is a message analysis diagram of a reverse control protocol of a forward error correction capability according to an embodiment of this application.

As shown in FIG. 6, ver identifies a protocol version, which is configured for accommodating a future protocol change; fec_mask is a mask identifier for an acceptable fec algorithm type and version, equivalent to a target algorithm; duration_max is a maximum group duration that can be accepted, equivalent to a target group duration; lvl_min is a required minimum protection level, equivalent to a target protection level; and time_stamp is a timestamp, which may be configured for resisting out-of-order network transmission.

The first control message may be obtained by performing encapsulation based on the second target algorithm set, the second target group duration, and the second target protection level. The second target algorithm set is the intersection of the first target algorithm set and the second encoding algorithm set. The second target group duration is the minimum one of the first target group duration and the second maximum group duration. The second target protection level is the minimum one of the first target protection level and the second maximum protection level.

The first control message is generated based on the capability expected for the current node and the capability propagated from the upstream node, which can help the upstream node to learn a communication condition and capability of a downstream node, thereby making corresponding adjustment and optimization.

503: Transmit the first control message to the second node, for the second node to perform forward error correction based on the first control message.

The reverse control message (the first control message) is transmitted to the upstream node (the second node). After receiving the reverse control message, the upstream node parses forward error correction capability information in the message. Based on the information, the upstream node may determine which forward error correction encoding algorithm to enable and select a group duration and a protection level for the forward error correction encoding algorithm.

For ease of understanding, the following parameters are defined herein in this embodiment of this application.

req_local: A forward error correction protection requirement generated by a node to protect its upstream channel, that is, a target forward error correction capability. Corresponding fields are as follows: a target encoding algorithm set req_local.mask, a target group duration req_local.duration, and a target protection level req_local.lvl.

By using a consumer as an example, a procedure of the reverse control method of the forward error correction capability is as follows:
1. Determine a target forward error correction capability for the consumer, and perform operation 2 if there is a change or there is no change but a detection timeout occurs.
2. If a target protection level is 0 and a current supported protection level is also 0, return to operation 1, or otherwise perform operation 3.
3. If an intersection of req_local.mask (the first target algorithm set) and cap_up.fec_mask (the second encoding algorithm set) is empty, or if cap_up.lvl_max (the second maximum protection level) is 0, perform operation 5, or otherwise perform operation 4.
4. Generate a reverse control message (the first control message), and transmit the reverse control message to a directly connected upstream node (node or generator), where in the control message, fec_mask is equal to an intersection (bitwise and "&") of req_local.mask and cap_up.fec_mask, duration_max is equal to min(req_local.duration, cap_up.duration_max), and lvl_min is equal to min(req_local.lvl, cap_up.lvl_max).
5. Update a latest req_local cache, and return to operation 1.

Further, regarding transmission timing (equivalent to propagation timing) for transmitting the first control message to the upstream node (the second node), the message may also be transmitted periodically (static periodic propagation) or transmitted immediately after a change occurs (immediate propagation upon change).

When the first control message is generated, the first control message may be generated based on the target forward error correction capability for the first node. However, when the first node has both a directly connected downstream node and a directly connected upstream node, the first node may be the forwarding node (node) in FIG. 1. In this case, the first node may further obtain a control message propagated from the downstream node, thereby obtaining a target forward error correction capability propagated from the downstream node. In this way, when generating the first control message, it is necessary to consider not only the target forward error correction capability for the first node, but also the target forward error correction capability propagated from the downstream node.

In a possible implementation, after operation 502, the method further includes the following operations.

5021: Obtain a second control message transmitted by the downstream node, the second control message indicating a third target algorithm set, a third target group duration, and a third target protection level.

In this case, the manner of obtaining the first control message by performing encapsulation based on the second target algorithm set, the second target group duration, and the second target protection level may be encapsulating a fourth target algorithm set, a fourth target group duration, and a fourth target protection level into the first control message, the fourth target algorithm set being an intersection of the second target algorithm set and the third target algorithm set, the fourth target group duration being a minimum one of the second target group duration and the third target group duration, and the fourth target protection level being a minimum one of the second maximum protection level and a maximum one of the first target protection level and the third target protection level (referring to 5022 in FIG. 5).

Operation 5022 may be a possible implementation of operation 502, showing how the first control message is generated when the first node is the forwarding node. When the first node has both an upstream node and a downstream node, the first node is a forwarding node (node). In this case, the first node includes both a local forward error correction protection requirement corresponding to its role as a receiving end of an upstream channel, and reverse control requests from each adjacent downstream channel to the local for its role as a transmitting end.

For ease of understanding, the following parameters are defined herein in this embodiment of this application.

req_down: A forward error correction protection requirement generated by a forwarding node by merging reverse control requests from all directly connected downstream channels. Corresponding fields are as follows: a target encoding algorithm set req_down.mask, a target group duration req_down.duration, and a target protection level req_down.lvl.

By using a node as an example, a procedure of the reverse control method of the forward error correction capability is as follows:
1. Detect a target forward error correction capability for the node and a reverse control message transmitted by each downstream node, and perform operation 2 if it is detected that the node has timed out or req_local has changed, or perform operation 4 if the reverse control message transmitted by the downstream node is received.
2. If a target protection level is 0 and a current supported protection level is also 0, return to operation 1, or otherwise perform operation 3.
3. Update a latest cap_local cache, and perform operation 6.
4. Check ver and time_stamp in the reverse control message, and if the version is incompatible or if the reverse control message is not a latest message, ignore the message and perform operation 1, or otherwise perform operation 5.
5. Cache a latest reverse control message (the second control message) of a corresponding downstream channel, and update a req_down cache, where mask in the control message is equal to an intersection (bitwise and "&") of fec_mask of all adjacent downstream reverse control requests, lvl is a maximum one of target protection levels of all adjacent downstream reverse control requests, and duration is a minimum one of target group durations of all adjacent downstream reverse control requests.
6. If req_local.lvl (the first target protection level) is 0, or if an intersection of cap_up.fec_mask (the second encoding algorithm set) and req_local.mask (the first target algorithm set) and req_down.mask (the third target algorithm set) is empty, or if cap_up.lvl_max (the second maximum protection level) is less than req_down.lvl (the third target protection level), perform operation 8, or otherwise perform operation 7.
7. Generate a reverse control message (the first control message), and transmit the reverse control message to a directly connected upstream node (node or generator), where in the control message, fec_mask (the fourth target algorithm set) is equal to (req_local.mask (the first target algorithm set) & req_down.mask (the third target algorithm set) & cap_up.fec_mask (the second encoding algorithm set)), duration_max (the fourth target group duration) is equal to min(req_local.duration (a first target encoding duration), req_down.duration (a third target encoding duration), cap_up.duration_max (a second maximum encoding duration)), and lvl_min (the fourth target protection level) is equal to min(max(req_local.lvl (the first target protection level), req_down.lvl (the third target protection level)), cap_up.lvl_max (the second maximum protection level)).
8. Obtain a CPU load of the node, and update cap_local.lvl_max (the first maximum protection level) with reference to an encoder type.
9. If cap_local.lvl_max (the first maximum protection level) is less than req_down.lvl (the third target protection level) and cap_local.lvl_max (the first maximum protection level) is less than cap_up.lvl_max (the second maximum protection level), or if an intersection of cap_local.mask (the first encoding algorithm set) and req_down.fec_mask (the third target algorithm set) is empty, perform operation 7, or otherwise perform operation 10.
10. Generate a reverse control message (the first control message), and transmit the reverse control message to a directly connected upstream node (node or generator), where in the control message, fec_mask (the fourth target algorithm set) is equal to an intersection (bitwise and "&") of req_local.mask (the first target algorithm set) and cap_up.fec_mask (the second encoding algorithm set), duration_max (the fourth target group duration) is equal to min(req_local.duration (a first target encoding duration), cap_up.duration_max (a second maximum encoding duration)), and lvl_min (the fourth target protection level) is equal to min(req_local.lvl (the first target protection level), cap_up.lvl_max (the second maximum protection level)).
11. Select a forward error correction encoder according to an intersection (bitwise and "&") of cap_local.mask (the first encoding algorithm set) and req_down.mask (the third target algorithm set), determine a group size by using a parameter min(req_down.duration, cap_local.duration_max), determine an encoding redundancy degree by using min(req_down.lvl, cap_local.lvl_max), enable or update the encoder, and then perform operation 1.

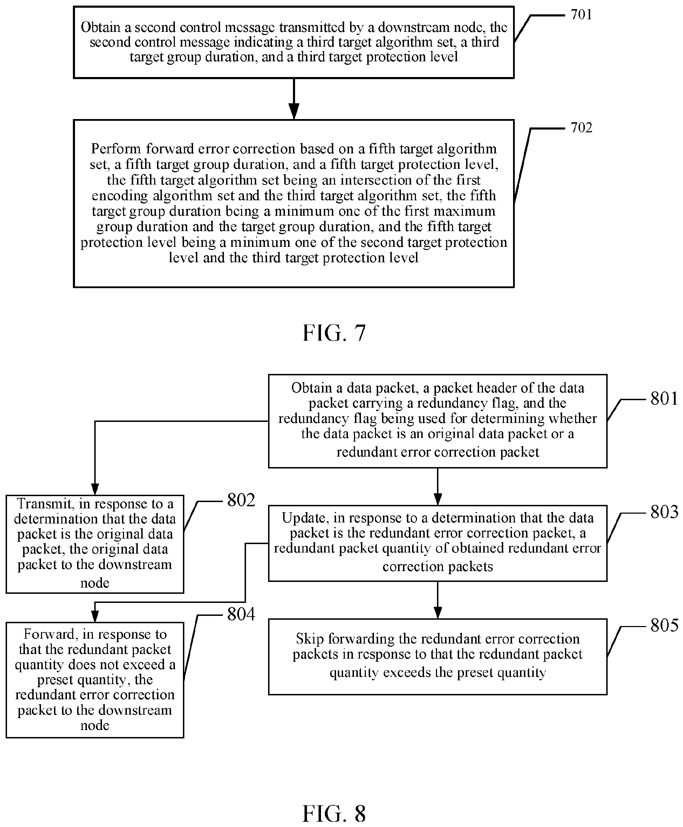

In an exemplary embodiment of the forward error correction capability propagation method provided in the embodiment corresponding to FIG. 2 in this application, refer to FIG. 7. FIG. 7 is a flowchart of a reverse control method based on a forward error correction capability propagation method according to an embodiment of this application. After operation 201 corresponding to FIG. 2, the method further includes the following operations.

701: Obtain a second control message transmitted by the downstream node, the second control message indicating a third target algorithm set, a third target group duration, and a third target protection level.

702: Perform forward error correction based on a fifth target algorithm set, a fifth target group duration, and a fifth target protection level, the fifth target algorithm set being an intersection of the first encoding algorithm set and the third target algorithm set, the fifth target group duration being a minimum one of the first maximum group duration and the third target group duration, and the fifth target protection level being a minimum one of the second target protection level and the third target protection level.

If the first node is a data transmitting node (generator), the generator may obtain a reverse control message (the second control message) transmitted by a downstream node, and then perform corresponding forward error correction in combination with the forward error correction capability in the second control message and the locally supported forward error correction capability.

By using a generator as an example, a procedure of the reverse control method of the forward error correction capability is as follows:
1. Detect a reverse control message transmitted by each downstream node, and perform operation 2 if the reverse control message transmitted by the downstream node is received.
2. Check ver and time_stamp in the reverse control message (the second control message), and if the version is incompatible or if the reverse control message is not a latest message, ignore the message and perform operation 1, or otherwise perform operation 3.
3. Cache a latest reverse control message (the second control message) of a corresponding downstream channel, and update a req_down cache, where mask in the control message is equal to an intersection (bitwise and "&") of fec_mask of all adjacent downstream reverse control, lvl is a maximum one of target protection levels of all adjacent downstream reverse control requests, and duration is a minimum one of target group durations of all adjacent downstream reverse control requests.
4. Obtain a CPU load of the generator, and update (the first maximum protection level) with reference to an encoder type.
5. Select a forward error correction encoder according to an intersection (bitwise and "&") (the fifth target algorithm set) of cap_local.mask (the first encoding algorithm set) and req_down.mask (the third target algorithm set), determine a group size (the fifth target group duration) by using a parameter min(req_down.duration, cap_local.duration_max), determine an encoding redundancy degree (the fifth target protection level) by using min(req_down.lvl, cap_local.lvl_max), enable or update the encoder, and then perform operation 1.

In an exemplary embodiment of the forward error correction capability propagation method provided in the embodiments corresponding to FIG. 2, FIG. 4, FIG. 5, and FIG. 7 in this application, refer to FIG. 8. FIG. 8 is a flowchart of a redundancy filtering method based on a forward error correction capability propagation method according to an embodiment of this application.

This embodiment of this application provides a filtering method for redundant data. Referring to FIG. 1, for a node (generator/node) with a plurality of directly connected downstream channels t, forward error correction redundancy locally coded by the node or forward error correction encoding redundancy received from upstream does not necessarily apply to all downstream channels. Therefore, in this embodiment of this application, a transmitting end of each channel t filters, according to reverse control received from the channel, redundant data transmitted downstream, thereby minimizing transmission redundancy while ensuring a protection level. The node needs to perform redundancy encoding on the data and then transmits coded data to a downstream node. In addition, the node needs to obtain a redundant data packet transmitted by an upstream node. Therefore, a redundancy filter corresponding to the filtering method for redundant data provided in this embodiment of this application is specifically deployed at the node.

After forward error correction capability propagation is performed in the topology network, the method further includes the following operations.

801: Obtain a data packet, a packet header of the data packet carrying a redundancy flag, and the redundancy flag being used for determining whether the data packet is an original data packet or a redundant error correction packet.

802: Transmit, in response to a determination that the data packet is the original data packet, the original data packet to the downstream node.

803: Update, in response to a determination that the data packet is the redundant error correction packet, a redundant packet quantity of obtained redundant error correction packets.

804: Forward, in response to that the redundant packet quantity does not exceed a preset quantity, the redundant error correction packet to the downstream node.

805: Skip forwarding the redundant error correction packets in response to that the redundant packet quantity exceeds the preset quantity.

In this embodiment of this application, to enable dynamic filtering, two extra data packet headers are introduced, which are respectively applied to a protected original data packet and a redundant packet providing forward error correction protection.

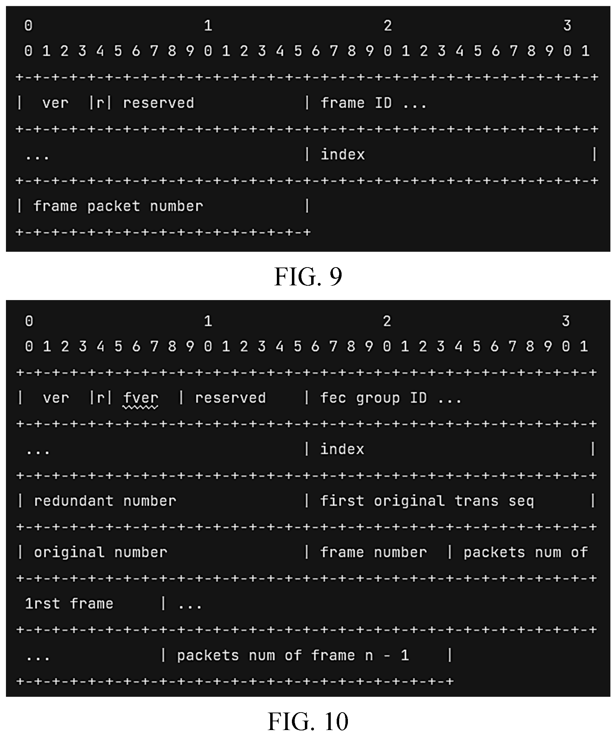

A packet header of the original data packet is shown in FIG. 9: a field ver is a version; r is a redundancy flag, set to 0, configured for representing that a current data packet is the original data packet; a frame identity (Identity, ID) is a frame ID; index is a sequence number within a frame; and frame packet number is a quantity of packets within a frame.

A packet header of the redundant error correction packet is shown in FIG. 10: a field ver is a version; r is a redundancy flag, set to 1, configured for representing that a current data packet is the redundant error correction packet; fver is an FEC algorithm identifier; fec group ID indicates a current group ID, and also corresponds to the first frame ID of a protected object; index is a sequence number relative to the first redundant packet in an FEC group; redundant number is a quantity of redundant packets in the FEC group; first orig sequence is a transmission sequence number of the first protected original packet, and all protected packets are consecutive; original number is a quantity of original packets in the FEC group; frame number is a quantity of frames in the FEC group; and packet number of frames is a quantity of packets in each frame except the last frame.

In this embodiment of this application, by defining two types of packet headers, the redundancy filter has sufficient information to distinguish between the redundant error correction packet and a non-redundant error correction packet (the original data packet). When the data packet is the original data packet, the original data packet is transmitted to the downstream node. When the data packet is the redundant error correction packet, the quantity of redundant packets of obtained redundant error correction packets is updated.

In addition, the preset quantity is defined for the redundant error correction packet that needs to be forwarded to the downstream node. When the quantity of redundant packets does not exceed the preset quantity, the current redundant error correction packets are transmitted to the downstream node. If the quantity of redundant packets exceeds the preset quantity, the current quantity of redundant error correction packets have been sufficient for the downstream node to perform forward error correction. Therefore, the redundant error correction packets can be not forwarded (the redundant error correction packets can be discarded), to reduce computing resources of the downstream node.

In a possible implementation, the preset quantity is a product of an encoding redundancy rate corresponding to a target protection level of the downstream node and a total quantity of redundant error correction packets.

A quantity of redundant error correction packets required for recovering data can be determined according to the encoding redundancy rate corresponding to the target protection level of the downstream node.

For example, if the encoding redundancy rate corresponding to the target protection level of the downstream node is ρ, and a quantity of data packets obtained after forward error correction encoding is performed on the original data is N, the downstream node can achieve a forward error correction effect by obtaining only ρ*N redundant data packets. In this case, the preset quantity is ρ*N. When the quantity of redundant packets recorded in the node does not exceed ρ*N, the redundant data packets are forwarded downstream. When the quantity of redundant packets recorded in the node exceeds ρ*N, the redundant data packets are not forwarded.

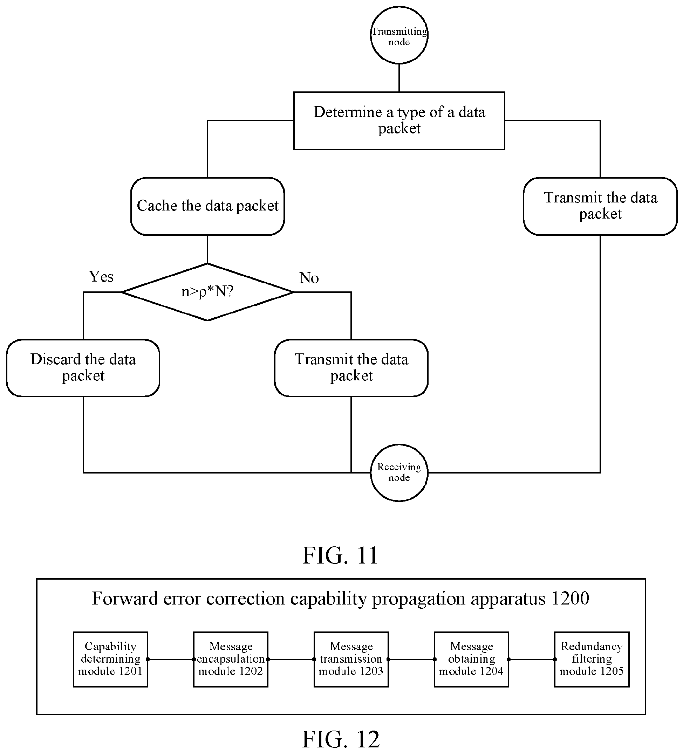

FIG. 11 is an operational logic diagram of a redundancy filtering method based on a forward error correction capability propagation method according to an embodiment of this application.

After obtaining an FEC data packet, a node (a transmitting node) determines a type of the data packet by a redundancy flag carried by a packet header of the data packet. If the data packet is an original data packet, the data packet is forwarded to a downstream node (a receiving node). If the data packet is a redundant error correction packet, the data packet is stored in a cache. According to a quantity of redundant packets of redundant error correction packets in the cache, whether the quantity of redundant packets (n) exceeds a product of an encoding redundancy rate (ρ) corresponding to a target protection level of the downstream node and a total quantity of redundant error correction packets (N) is determined. If n does not exceed the product, the redundant error correction packets are transmitted. If n exceeds the product, the redundant error correction packets are discarded.

The following describes a forward error correction capability propagation apparatus in this application in detail, referring to FIG. 12. FIG. 12 is a schematic diagram of an embodiment of a forward error correction capability propagation apparatus 1200 according to an embodiment of this application. The forward error correction capability propagation apparatus 1200 includes:
a capability determining module 1201, configured to determine a forward error correction capability of a first node, the forward error correction capability including a first encoding algorithm set, a first maximum group duration, and a first maximum protection level of the first node, the first encoding algorithm set indicating a set of encoding algorithms of the first node, the maximum group duration indicating a maximum duration for receiving a single group of data by the first node;
a message encapsulation module 1202, configured to perform encapsulation based on the first encoding algorithm set, the first maximum group duration, and the first maximum protection level, to obtain a first capability message; and
a message transmission module 1203, configured to transmit the first capability message to a downstream node connected to and adjacent to the first node, in order to determine, based on the first capability message, the forward error correction capability propagated from the first node.

In a possible implementation, the capability determining module 1201 is specifically configured to: determine the first encoding algorithm set according to an encoder operable on the first node; determine the first maximum group duration according to a service configuration of the first node; and determine the first maximum protection level according to node performance of the first node.

In a possible implementation, the apparatus further includes:
a message obtaining module 1204, configured to obtain a second capability message transmitted by a second node, the second node being an upstream node connected to and adjacent to the first node, the second capability message being used for determining a forward error correction capability propagated from the second node, and the forward error correction capability propagated from the second node including a second encoding algorithm set, a second maximum group duration, and a second maximum protection level; and
the message encapsulation module 1202 is further configured to encapsulate a third encoding algorithm set, a third maximum group duration, and a third maximum protection level into the first capability message, the third encoding algorithm set being a union of the first encoding algorithm set and the second encoding algorithm set, the third maximum group duration being a maximum one of the first maximum group duration and the second maximum group duration, and the third maximum protection level being a maximum one of the first maximum protection level and the second maximum protection level.

In a possible implementation, the second capability message carries a protocol version number;
and the apparatus further includes:
a verification module, configured to determine, according to the protocol version number, whether the second capability message is compatible with the first node.

In a possible implementation, the second capability message carries a timestamp; and
the apparatus further includes:
a verification module, configured to determine, according to the timestamp, whether the second capability message is a latest message.

In a possible implementation, the apparatus further includes:
a storage module, configured to store the second capability message in response to a determination that no downstream node connected to and adjacent to the first node exists.

In a possible implementation, the apparatus further includes:
a detection module, configured to determine a target forward error correction capability for the first node, the target forward error correction capability for the first node including a first target algorithm set, a first target group duration, and a first target protection level;
the message encapsulation module 1202 is further configured to perform encapsulation based on a second target algorithm set, a second target group duration, and a second target protection level in response to that the target forward error correction capability for the first node is different from the forward error correction capability in the second capability message, to obtain a first control message, the second target algorithm set being an intersection of the first target algorithm set and the second encoding algorithm set, the second target group duration being a minimum one of the first target group duration and the second maximum group duration, and the second target protection level being a minimum one of the first target protection level and the second maximum protection level; and
the message transmission module 1203 is further configured to transmit the first control message to the second node, for the second node to perform forward error correction based on the first control message.

In a possible implementation, the apparatus further includes:
a message obtaining module 1204, configured to obtain a second control message transmitted by the downstream node, the second control message indicating a third target algorithm set, a third target group duration, and a third target protection level; and
the message encapsulation module 1202 is further configured to encapsulate a fourth target algorithm set, a fourth target group duration, and a fourth target protection level into the first control message, the fourth target algorithm set being an intersection of the second target algorithm set and the third target algorithm set, the fourth target group duration being a minimum one of the second target group duration and the third target group duration, and the fourth target protection level being a minimum one of: the second maximum protection level, and a maximum one of the first target protection level and the third target protection level.

In a possible implementation, the apparatus further includes:
a message obtaining module 1204, configured to obtain a second control message transmitted by the downstream node, the second control message indicating a third target algorithm set, a third target group duration, and a third target protection level; and
a capability execution module, configured to perform forward error correction based on a fifth target algorithm set, a fifth target group duration, and a fifth target protection level, the fifth target algorithm set being an intersection of the first encoding algorithm set and the third target algorithm set, the fifth target group duration being a minimum one of the first maximum group duration and the third target group duration, and the fifth target protection level being a minimum one of the second target protection level and the third target protection level.

In a possible implementation, the apparatus further includes:
a redundancy filtering module 1205, configured to: obtain a data packet, a packet header of the data packet carrying a redundancy flag, and the redundancy flag being used for determining whether the data packet is an original data packet or a redundant error correction packet; and transmit, in response to a determination that the data packet is the original data packet, the original data packet to the downstream node; or update, in response to a determination that the data packet is the redundant error correction packet, a redundant packet quantity of obtained redundant error correction packets; and forward, in response to that the redundant packet quantity does not exceed a preset quantity, the redundant error correction packets to the downstream node; or skip forwarding the redundant error correction packets in response to that the redundant packet quantity exceeds the preset quantity.

In a possible implementation, the preset quantity is a product of an encoding redundancy rate corresponding to a target protection level of the downstream node and a total quantity of redundant error correction packets.

The forward error correction capability propagation apparatus provided in this embodiment of this application corresponds to the forward error correction capability propagation method in the foregoing embodiments. For relevant descriptions, refer to the corresponding position above, and details are not described herein again.

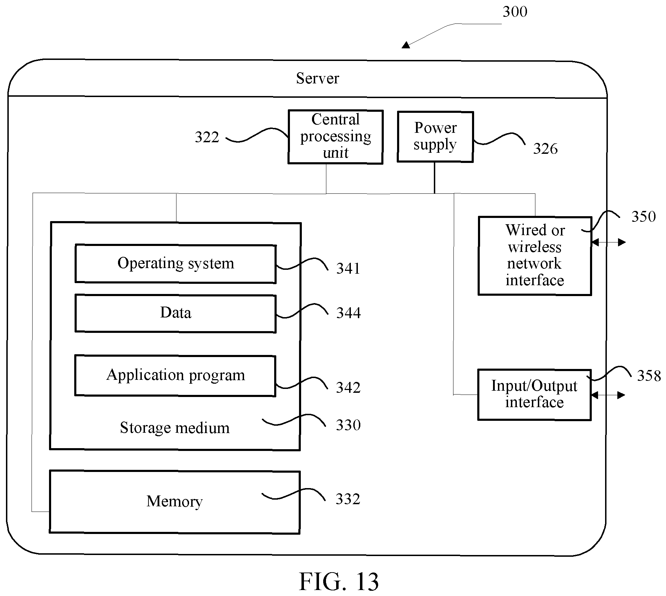

FIG. 13 is a schematic structural diagram of a server according to an embodiment of this application. The server 300 may vary greatly due to different configurations or performance, and may include one or more CPUs 322 (for example, one or more processors) and a memory 332, and one or more storage media 330 (for example, one or more mass storage devices) that store an application program 342 or data 344. The memory 332 and the storage medium 330 may be transient or persistent storages. The program stored in the storage medium 330 may include one or more modules (not marked in the figure), and each module may include a series of instruction operations to the server. Furthermore, the central processing unit 322 may be configured to communicate with the storage medium 330, and perform, on the server 300, the series of instruction operations in the storage medium 330.

The server 300 may further include one or more power supplies 326, one or more wired or wireless network interfaces 350, one or more input/output interfaces 358, and/or one or more operating systems 341, for example, Windows Server^{™}, Mac OS X^{™}, Unix^{™}, Linux^{™}, and FreeBSD^{™}.

The operations performed by the server in the foregoing embodiment may be based on the server structure shown in FIG. 13.

A person skilled in the art may clearly understand that, for the purpose of convenient and brief description, for a detailed working process of the system, apparatus, and unit described above, refer to a corresponding process in the method embodiments, and details are not described herein again.

In the embodiments of this application, the term "module" or "unit" refers to a computer program or a part of the computer program with a predetermined function, which operates together with another relevant part to achieve a predetermined goal, and can be implemented in whole or in part by using software, hardware (such as a processing circuit or a memory), or a combination of software and hardware. Likewise, one processor (or a plurality of processors or memories) may be configured to implement one or more modules or units. In addition, each module or unit may be a part of an overall module or unit that includes the function of the module or unit.

In the several embodiments provided in this application, the disclosed system, apparatus, and method may be implemented in other manners. For example, the described apparatus embodiment is merely exemplary. For example, the unit division is merely a logical function division and may be other division during actual implementation. For example, a plurality of units or components may be combined or integrated into another system, or some features may be ignored or not performed. In addition, the shown or discussed mutual couplings or direct couplings or communication connections may be implemented through some interfaces. The indirect couplings or communication connections between the apparatus or units may be implemented in electronic, mechanical, or other forms.

The units described as separate parts may or may not be physically separate, and components displayed as units may or may not be physical units, that is, may be located in one position, or may be distributed on a plurality of network units. Some or all of the units may be selected according to an actual requirement to achieve the objectives of the solutions in the embodiments.

In addition, functional units in the embodiments of this application may be integrated into one processing unit, or each of the units may exist alone physically, or two or more units are integrated into one unit. The integrated unit may be implemented in the form of hardware, or may be implemented in the form of a software function unit.

When the integrated unit is implemented in the form of a software functional unit and sold or used as an independent product, the integrated unit may be stored in a computer-readable storage medium. Based on such an understanding, the technical solutions of this application essentially, or the part contributing to the related art, or all or a part of the technical solutions may be implemented in the form of a software product. The computer software product is stored in a storage medium and includes several instructions for instructing a computer device (which may be a personal computer, a server, or a network device) to perform all or some of the operations of the method described in the embodiments of this application. The foregoing storage medium includes: any medium that can store program code, such as a USB flash drive, a removable hard disk, a read-only memory (ROM), a RAM, a magnetic disk, a compact disc, or the like.

The foregoing embodiments are merely intended for describing the technical solutions of this application, but not for limiting this application. It is to be understood by a person of ordinary skill in the art that although this application has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the technical solutions of the embodiments of this application.

## Claims

1. A forward error correction capability propagation method, executable by a computer device, the method comprising:
determining a forward error correction capability of a first node, the forward error correction capability comprising a first encoding algorithm set, a first maximum group duration, and a first maximum protection level of the first node, the first encoding algorithm set indicating a set of encoding algorithms of the first node, the maximum group duration indicating a maximum duration for receiving a single group of data by the first node;
performing encapsulation based on the first encoding algorithm set, the first maximum group duration, and the first maximum protection level, to obtain a first capability message; and
transmitting the first capability message to a downstream node connected to and adjacent to the first node, in order to determine, based on the first capability message, the forward error correction capability propagated from the first node.

2. The method according to claim 1, wherein the determining a forward error correction capability of a first node comprises:
determining the first encoding algorithm set according to an encoder operable on the first node;
determining the first maximum group duration according to a service configuration of the first node; and
determining the first maximum protection level according to node performance of the first node.

3. The method according to claim 1 or 2, wherein after the determining a forward error correction capability of a first node, the method further comprises:
obtaining a second capability message transmitted by a second node, the second node being an upstream node connected to and adjacent to the first node, the second capability message being used for determining a forward error correction capability propagated from the second node, and the forward error correction capability propagated from the second node comprising a second encoding algorithm set, a second maximum group duration, and a second maximum protection level; and
the performing encapsulation based on the first encoding algorithm set, the first maximum group duration, and the first maximum protection level, to obtain a first capability message comprises:
encapsulating a third encoding algorithm set, a third maximum group duration, and a third maximum protection level into the first capability message, the third encoding algorithm set being a union of the first encoding algorithm set and the second encoding algorithm set, the third maximum group duration being a maximum one of the first maximum group duration and the second maximum group duration, and the third maximum protection level being a maximum one of the first maximum protection level and the second maximum protection level.

4. The method according to claim 3, wherein the second capability message carries a protocol version number; and
after the obtaining a second capability message transmitted by a second node, the method further comprises:
determining, according to the protocol version number, whether the second capability message is compatible with the first node.

5. The method according to claim 3 or 4, wherein the second capability message carries a timestamp; and
after the obtaining a second capability message transmitted by a second node, the method further comprises:
determining, according to the timestamp, whether the second capability message is a latest message.

6. The method according to any one of claims 3 to 5, wherein after the obtaining a second capability message transmitted by a second node, the method further comprises:
storing the second capability message in response to a determination that no downstream node connected to and adjacent to the first node exists.

7. The method according to any one of claims 3 to 6, wherein after the obtaining a second capability message transmitted by a second node, the method further comprises:
determining a target forward error correction capability for the first node, the target forward error correction capability for the first node comprising a first target algorithm set, a first target group duration, and a first target protection level;
performing encapsulation based on a second target algorithm set, a second target group duration, and a second target protection level in response to that the target forward error correction capability for the first node is different from the forward error correction capability in the second capability message, to obtain a first control message, the second target algorithm set being an intersection of the first target algorithm set and the second encoding algorithm set, the second target group duration being a minimum one of the first target group duration and the second maximum group duration, and the second target protection level being a minimum one of the first target protection level and the second maximum protection level; and
transmitting the first control message to the second node, for the second node to perform forward error correction based on the first control message.

8. The method according to claim 7, wherein after the obtaining a second capability message transmitted by a second node, the method further comprises:
obtaining a second control message transmitted by the downstream node, the second control message indicating a third target algorithm set, a third target group duration, and a third target protection level; and
the performing encapsulation based on a second target algorithm set, a second target group duration, and a second target protection level, to obtain a first control message comprises:
encapsulating a fourth target algorithm set, a fourth target group duration, and a fourth target protection level into the first control message, the fourth target algorithm set being an intersection of the second target algorithm set and the third target algorithm set, the fourth target group duration being a minimum one of the second target group duration and the third target group duration, and the fourth target protection level being a minimum one of: the second maximum protection level, and a maximum one of the first target protection level and the third target protection level.

9. The method according to any one of claims 1 to 8, wherein after the determining a forward error correction capability of a first node, the method further comprises:
obtaining a second control message transmitted by the downstream node, the second control message indicating a third target algorithm set, a third target group duration, and a third target protection level; and
performing forward error correction based on a fifth target algorithm set, a fifth target group duration, and a fifth target protection level, the fifth target algorithm set being an intersection of the first encoding algorithm set and the third target algorithm set, the fifth target group duration being a minimum one of the first maximum group duration and the third target group duration, and the fifth target protection level being a minimum one of the second target protection level and the third target protection level.

10. The method according to any one of claims 1 to 9, wherein after the transmitting the first capability message to the downstream node, the method further comprises:
obtaining a data packet, a packet header of the data packet carrying a redundancy flag, and the redundancy flag being used for determining whether the data packet is an original data packet or a redundant error correction packet; and
transmitting, in response to a determination that the data packet is the original data packet, the original data packet to the downstream node; or
updating, in response to a determination that the data packet is the redundant error correction packet, a redundant packet quantity of obtained redundant error correction packets; and
forwarding, in response to that the redundant packet quantity of does not exceed a preset quantity, the redundant error correction packet to the downstream node;
skipping forwarding the redundant error correction packet in response to that the redundant packet quantity exceeds the preset quantity.

11. The method according to claim 10, wherein the preset quantity is a product of an encoding redundancy rate corresponding to a target protection level of the downstream node and a total quantity of redundant error correction packets.

12. A forward error correction capability propagation apparatus, deployed on a computer device, the apparatus comprising:
a capability determining module, configured to determine a forward error correction capability of a first node, the forward error correction capability comprising a first encoding algorithm set, a first maximum group duration, and a first maximum protection level of the first node, the first encoding algorithm set indicating a set of encoding algorithms of the first node, the maximum group duration indicating a maximum duration for receiving a single group of data by the first node;
a message encapsulation module, configured to perform encapsulation based on the first encoding algorithm set, the first maximum group duration, and the first maximum protection level, to obtain a first capability message; and
a message transmission module, configured to transmit the first capability message to a downstream node connected to and adjacent to the first node, in order to determine, based on the first capability message, the forward error correction capability propagated from the first node.

13. A computer device, comprising a memory and a processor,
the memory having a computer program stored therein, the computer program, when executed on the processor, implementing the forward error correction capability propagation method according to any one of claims 1 to 11.

14. A computer-readable storage medium, comprising a computer program, the computer program, when executed on a computer, causing the computer to perform the forward error correction capability propagation method according to any one of claims 1 to 11.

15. A computer program product, comprising a computer program, the computer program, when executed by a processor, implementing the forward error correction capability propagation method according to any one of claims 1 to 11.
